(19) Europäisches Patentamt

European Patent Office

Office européen des brevets

(11) **EP 1 672 587 A2**

(12) **EUROPEAN PATENT APPLICATION**

(43) Date of publication:
21.06.2006 Bulletin 2006/25

(51) Int Cl.:
*G06T 7/40* (2006.01)

(21) Application number: 06075780.4

(22) Date of filing: 28.09.2000

(84) Designated Contracting States:
AT BE CH CY DE DK ES FI FR GB GR IE IT LI LU MC NL PT SE

(30) Priority: 01.10.1999 US 157077

(62) Document number(s) of the earlier application(s) in accordance with Art. 76 EPC:
00308501.6 / 1 089 232

(71) Applicants:
• SAMSUNG ELECTRONICS CO., LTD.
Suwon-City, Kyungki-do (KR)
• The Regents of the University of California
Oakland CA 94607-5200 (US)

(72) Inventors:
• Shin, Hyun-doo,
510-1302 Mujigae Maeul Apt.
Sungnam-city,
Kyungki-do (KR)

• Choi, Yang-lim,
210-1509 Imae Hanshim Apt.
Seongnam-city,
Kyungki-do (KR)
• Manjunath, B.S.
Santa Barbara, CA 93106-9560 (US)

(74) Representative: **Robinson, Ian Michael et al**
**Appleyard Lees,**
**15 Clare Road**
**Halifax HX1 2HY (GB)**

Remarks:
This application was filed on 31-03-2006 as a divisional application to the application mentioned under INID code 62.

(54) **Method for analyzing texture of digital image**

(57)    A digital image texture analyzing method uses (302) the mean ($\mu_0$) and variance ($\sigma_0$) of the pixel values of an original image. Further, m × n filtered images are obtained (304) by filtering the original image using predetermined filters, each having a unique combination of one of m scales and one of n orientations, where m and n are predetermined positive integers, and the means ($\mu_{11}, \mu_{21}, \dots, \mu_{mn}$) and variances ($\sigma_{11}, \sigma_{21}, \dots, \sigma_{mn}$) of the respective filtered images are calculated (306). The texture analyzing method allows image textures to be more accurately analyzed and compared for similarity, even when an image is rotated and/or enlarged or reduced relative to another image.

FIG. 5

EP 1 672 587 A2

**Description**

The present invention relates to a method for analyzing of the texture of a digital image, and more particularly to a method for analyzing the texture of a digital image using a texture descriptor.

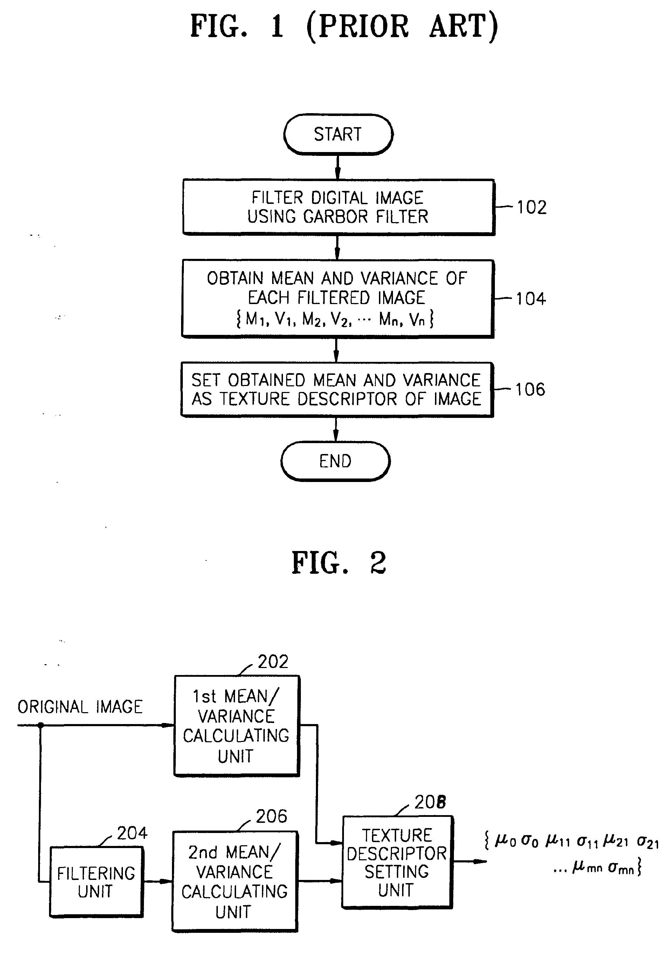

Figure 1 illustrates a conventional digital image texture analyzing method. Referring to Figure 1, filtered images are obtained by performing a predetermined filtering method, and the mean values and variances of the pixel values of the filtered images are used as texture descriptors of the images. The texture descriptors indicate an analysis result of image texture.

However, according to the conventional digital image texture analyzing method, even when the textures of an image are similar to those of another image, in the case where one image is rotated, enlarged or reduced relative to the other image, the textures of the two images are analyzed to be different.

An aim of the present invention is to provide a digital image texture analyzing method for analyzing and comparing textures of images more accurately.

In one embodiment it is desired to provide a digital image texture analyzing method for accurately analyzing the similarity of textures of two images.

In particular it is desired to provide a digital image texture analyzing method for accurately analyzing that textures of two images are similar even when one image is rotated relative to the other image, and/or when one image is enlarged or reduced relative to the other image.

Another aim of the present invention is to provide a digital image searching method for searching for an image using a texture descriptor indexed by the digital image texture analyzing method.

Also, it is desired to provide a digital image texture analyzing apparatus for performing the analyzing method and/or the searching method. Also, it is desired to provide a computer-readable recording medium for storing program codes for performing the digital image texture analyzing method and/or searching method.

According to the present invention there is provided an apparatus and method as set forth in the appended claims. Preferred features of the invention will be apparent from the dependent claims, and the description which follows.

In one aspect of the invention there is provided a digital image texture analyzing method including the step of obtaining a texture descriptor including the mean of the pixel values of an original image as a texture feature.

Here, the texture feature may further include the variance of the pixel values of the original image.

Also, the digital image texture analyzing method may include the step of obtaining a texture descriptor including the variance of the pixel values of an original image as a texture feature.

According to another aspect of the invention, there is provided a digital image texture analyzing method including the steps of (a) obtaining the mean $(\mu_0)$ and variance $(\sigma_0)$ of the pixel values of an original image, (b) obtaining m x n filtered images by filtering the original image using predetermined filters, each having a unique combination of one of m scales and one of n orientations, where m and n are predetermined positive integers, (c) calculating the means $(\mu_{11}, \mu_{21},....., \mu_{mn})$ and variances $(\sigma_{11}, \sigma_{21},...,\sigma mn)$ of the respective filtered images, and (d) obtaining a texture descriptor having the mean $(\mu_0)$ and variance $(\sigma_0)$ of the pixel values of the original image obtained in the step (a), and the means $(\mu_{11}, \mu_{21}, ..., \mu_{mn})$ and variances $(\sigma_{11}, \sigma_{21}, ..., \sigma_{mn})$ of the respective filtered images obtained in the step (c), as texture features.

Also according to the present invention there is provided a computer-readable recording medium for storing program codes for performing a digital image texture analyzing method including the steps of (a) obtaining the mean $(\mu_0)$ and variance $(\sigma_0)$ of the pixel values of an original image, (b) obtaining m x n filtered images by filtering the original image using predetermined filters, each having a unique combination of one of m scales and one of n orientations, where m and n are predetermined positive integers, (c) calculating the means $(\mu_{11}, \mu_{21}, ..., \mu_{mn})$ and variances $(\sigma_{11}, \sigma_{21},..., \sigma_{mn})$ of the respective filtered images, and (d) obtaining a texture descriptor having the mean $(\mu_0)$ and variance $(\sigma_0)$ of the pixel values of the original image obtained in the step (a), and the means $(\mu_{11}, \mu_{21}, ..., \mu_{mn})$ and variances $(\sigma_{11}, \sigma_{21},..., \sigma_{mn})$ of the respective filtered images, obtained in the step (c), as texture features.

Further, according to the present invention there is provided a digital image texture analyzing apparatus including a mean/variance calculating unit for calculating the mean and variance of the pixel values of an original image, and a texture descriptor setting unit for setting the mean and variance as texture descriptors.

The apparatus may further include a filtering unit for filtering the original image using predetermined filters, each having a unique combination of one of m scales and one of n orientations, where m and n are predetermined positive integers, to obtain m x n filtered images, wherein the mean/variance calculating unit obtains the mean $(\mu_0)$ and variance $(\sigma_0)$ of the pixel values of the original image and the means $(\mu_{11}, \mu_{21}, ..., \mu_{mn})$ and variances $(\sigma_{11}, \sigma_{21}, ..., \sigma_{mn})$ of the respective filtered images, and wherein the texture descriptor setting unit obtains a texture descriptor having the mean $(\mu_0)$ and variance $(\sigma_0)$ of the pixel values of the original image, and the means $(\mu_{11}, \mu_{21}, ... , \mu_{mn})$ and variances $(\sigma_{11}, \sigma_{21},..., \sigma_{mn})$ of the respective filtered images, as texture features.

Also according to the invention there is provided a digital image searching method including the step of searching for an image having a similar texture descriptor to a query image using a texture descriptor having the mean and variance of the pixel values of an original image as texture features.

Further according to the present invention there is provided a digital image texture analyzing method for evaluating the similarity of textures of two arbitrary digital images by obtaining a matching metric between the two images, the method including the step of calculating the matching metric including absolute differences between the means of the pixel values of the two arbitrary digital images.

The matching metric may further include absolute differences between the variances of the pixel values of the original image.

According to another aspect of the present invention, there is provided a digital image texture analyzing method for evaluating the similarity of textures of two arbitrary digital images by obtaining a matching metric between the two images, the method including the step of calculating the matching metric including absolute differences between the variances of the pixel values of the two arbitrary digital images.

Alternatively, the digital image texture analyzing method may include the steps of (a) obtaining m x n filtered images with respect to two arbitrary images using predetermined filters, each having a unique combination of one of m scales and one of n orientations, where m and n are predetermined positive integers, and (b) calculating the matching metric defined by:

$$d(i, j) = \sum_{m,n} d_{m,n}(i, j) + b$$

with respect to the original image and the m x n filtered images, where the mean and variance of the pixel values of the respective images are $\mu$ and $\sigma$, the mean and variance of the pixel values of the original image are $\mu_0$ and $\sigma_0$,

$$b = \left| \frac{\mu_0^{(i)} - \mu_0^{(j)}}{\alpha(\mu_0)} \right| + \left| \frac{\sigma_0^{(i)} - \sigma_0^{(j)}}{\alpha(\sigma_0)} \right|, \quad d_{m,n}(i, j) = \left| \frac{\mu_{m,n}^{(i)} - \mu_{m,n}^{(j)}}{\alpha(\mu_{m,n})} \right| + \left| \frac{\sigma_{m,n}^{(i)} - \sigma_{m,n}^{(j)}}{\alpha(\sigma_{m,n})} \right|$$

,and $\alpha$ ( ) is a predetermined scaling function.

In yet another aspect of the present invention there is provided a computer-readable recording medium for storing program codes for performing a digital image texture analyzing method for evaluating the similarity of textures of two arbitrary digital images by obtaining a matching metric between the two images, the method including the steps of (a) obtaining m x n filtered images with respect to two arbitrary images using predetermined filters, each having a unique combination of one of m scales and one of n orientations, where m and n are predetermined positive integers, and (b) calculating the matching metric defined by:

$$d(i, j) = \sum_{m,n} d_{m,n}(i, j) + b$$

with respect to the original image and the m x n filtered images, where the mean and variance of the pixel values of the respective images are $\mu$ and $\sigma$, the mean and variance of the pixel values of the original image are $\mu_0$ and $\sigma_0$,

$$b = \left| \frac{\mu_0^{(i)} - \mu_0^{(j)}}{\alpha(\mu_0)} \right| + \left| \frac{\sigma_0^{(i)} - \sigma_0^{(j)}}{\alpha(\sigma_0)} \right|, \quad d_{m,n}(i, j) = \left| \frac{\mu_{m,n}^{(i)} - \mu_{m,n}^{(j)}}{\alpha(\mu_{m,n})} \right| + \left| \frac{\sigma_{m,n}^{(i)} - \sigma_{m,n}^{(j)}}{\alpha(\sigma_{m,n})} \right|$$

,and $\alpha$( ) is a predetermined scaling function.

In another aspect of the present invention there is provided a digital image texture analyzing apparatus for evaluating the similarity of textures of two arbitrary digital images by obtaining a matching metric between the two images, the apparatus including a filtering unit for obtaining m x n filtered images with respect to two arbitrary images using predetermined filters, each having a unique combination of one of m scales and one of n orientations, where m and n are predetermined positive integers, and a matching metric calculating unit for calculating the matching metric defined by:

$$d(i, j) = \sum_{m,n} d_{m,n}(i, j) + b$$

with respect to the original image and the m x n filtered images, where the mean and variance of the pixel values of the respective images are $\mu$ and $\sigma$, the mean and variance of the pixel values of the original image are $\mu_0$ and $\sigma_0$,

$$b = \left| \frac{\mu_0^{(i)} - \mu_0^{(j)}}{\alpha(\mu_0)} \right| + \left| \frac{\sigma_0^{(i)} - \sigma_0^{(j)}}{\alpha(\sigma_0)} \right|, \quad d_{m,n}(i, j) = \left| \frac{\mu_{m,n}^{(i)} - \mu_{m,n}^{(j)}}{\alpha(\mu_{m,n})} \right| + \left| \frac{\sigma_{m,n}^{(i)} - \sigma_{m,n}^{(j)}}{\alpha(\sigma_{m,n})} \right|$$

,and $\alpha$ ( ) is a predetermined scaling function.

In still another aspect of the present invention there is provided a digital image texture analyzing method for evaluating the similarity of textures of two arbitrary digital images by obtaining a matching metric between the two images, the method including the steps of (a) obtaining filtered images using predetermined filters having different orientation coefficients with respect to two arbitrary images, and (b) obtaining a matching metric by calculating the minimum value of the sum of absolute differences between the means of the pixel values with respect to an arbitrary filtered image and images filtered by filters having orientation coefficients different from those of filters used for filtering the arbitrary image.

According to another aspect of the present invention, there is provided a digital image texture analyzing method for evaluating the similarity of textures of two arbitrary digital images by obtaining a matching metric between the two images, the method including the steps of (a) obtaining filtered images using predetermined filters having different orientation coefficients with respect to two arbitrary images, and (b) obtaining a matching metric by calculating the minimum value of the sum of absolute differences between the variances of the pixel values with respect to an arbitrary filtered image and images filtered by filters having orientation coefficients different from those of filters used for filtering the arbitrary image.

In a further aspect of the present invention there is provided a computer-readable recording medium for storing program codes for performing a digital image texture analyzing method for evaluating the similarity of textures of two arbitrary digital images by obtaining a matching metric between the two images, the method including the steps of (a) obtaining m x n filtered images with respect to two arbitrary images using predetermined filters, each having a unique combination of one of m scales and one of n orientations, where m and n are predetermined positive integers, and (b) calculating the matching metric defined by:

$$d_{m,n}(i, j) = \min_{1 \le l \le K} \left[ \sum_{m,n} \left( \left| \frac{\mu_{m,n}^{(i)}}{\alpha(\mu_{m,n})} - \frac{\mu_{m,n\oplus l}^{(j)}}{\alpha(\mu_{m,n})} \right| \right) + \left( \left| \frac{\sigma_{m,n}^{(i)}}{\alpha(\sigma_{m,n})} - \frac{\sigma_{m,n\oplus l}^{(j)}}{\alpha(\sigma_{m,n})} \right| \right) \right] + b$$

with respect to the m x n filtered images, where the mean and variance of the pixel values of the respective images are $\mu$ and $\sigma$, K is a predetermined positive integer representing the number of orientations to be considered, $\oplus$ denotes a modulo shift function, and $\alpha$ ( ) is a predetermined scaling function.

In still another aspect of the present invention there is provided a digital image texture analyzing apparatus for evaluating the similarity of textures of two arbitrary digital images by obtaining a matching metric between the two images, the apparatus including a filtering unit for obtaining m x n filtered images with respect to two arbitrary images by filtering the original image using predetermined filters, each having a unique combination of one of m scales and one of n orientations, where m and n are predetermined positive integers, and a matching metric calculating unit for calculating the matching metric defined by:

$$d_{m,n}(i, j) = \min_{1 \le t \le K} \left[ \sum_{m,n} \left( \left| \frac{\mu_{m,n}^{(i)}}{\alpha(\mu_{m,n})} - \frac{\mu_{m,n\oplus t}^{(j)}}{\alpha(\mu_{m,n})} \right| \right) + \left( \left| \frac{\sigma_{m,n}^{(i)}}{\alpha(\sigma_{m,n})} - \frac{\sigma_{m,n\oplus t}^{(j)}}{\alpha(\sigma_{m,n})} \right| \right) \right] + b$$

with respect to the m x n filtered images, where the mean and variance of the pixel values of the respective images are $\mu$ and $\sigma$, the mean and variance of the pixel values of the original image are $\mu_0$ and $\sigma_0$, K is a predetermined positive integer representing the number of orientations to be considered,

$$b = \left| \frac{\mu_0^{(i)} - \mu_0^{(j)}}{\alpha(\mu_0)} \right| + \left| \frac{\sigma_0^{(i)} - \sigma_0^{(j)}}{\alpha(\sigma_0)} \right|$$

$\oplus$ denotes a modulo shift function, and $\alpha(\ )$ is a predetermined scaling function.

In yet another aspect of the present invention, there is provided a digital image texture analyzing method for evaluating the similarity of textures of two arbitrary digital images by obtaining a matching metric between the two images, the method including the steps of (a) obtaining filtered images using predetermined filters having different scale coefficients with respect to two arbitrary images, and (b) obtaining a matching metric by calculating the minimum value of the sum of absolute differences between the means of the pixel values with respect to an arbitrary filtered image and images filtered by filters having scale coefficients different from those of filters used for filtering the arbitrary image.

According to another aspect of the present invention, there is provided a digital image texture analyzing method for evaluating the similarity of textures of two arbitrary digital images by obtaining a matching metric between the two images, the method including the steps of (a) obtaining filtered images using predetermined filters having different scale coefficients with respect to two arbitrary images, and (b) obtaining a matching metric by calculating the minimum value of the sum of absolute differences between the variances of the pixel values with respect to an arbitrary filtered image and images filtered by filters having scale coefficients different from those of filters used for filtering the arbitrary image.

In a further aspect of the present invention, there is provided a computer-readable recording medium for storing program codes for performing a digital image texture analyzing method for evaluating the similarity of textures of two arbitrary digital images by obtaining a matching metric between the two images, the method including the steps of (a) obtaining m x n filtered images with respect to two arbitrary images by filtering the original image using predetermined filters, each having a unique combination of one of m scales and one of n orientations, where m and n are predetermined positive integers, and (b) calculating the matching metric defined by:

$$d(i, j) = \min_{\substack{p=0,1 \\ q=0,1}} \left[ \sum_{m} \sum_{n}^{S-1} \left| \frac{\mu_{m+p,n}^i}{\alpha(\mu_{m+p,n})} - \frac{\mu_{m+q,n}^j}{\alpha(\mu_{m+q,n})} \right| + \left| \frac{\sigma_{m+p,n}^i}{\alpha(\sigma_{m+p,n})} - \frac{\sigma_{m+q,n}^j}{\alpha(\sigma_{m+q,n})} \right| \right]$$

with respect to the original image and the m x n filtered images, where the mean and variance of the pixel values of the respective images are $\mu$ and $\sigma$, S is a predetermined positive integer representing the number of scale coefficients to be considered, and $\alpha(\ )$ is a predetermined scaling function.

In another aspect of the present invention there is provided a digital image texture analyzing apparatus for evaluating the similarity of textures of two arbitrary digital images by obtaining a matching metric between the two images, the apparatus including a filtering unit for obtaining m x n filtered images with respect to two arbitrary images by filtering the original image using predetermined filters, each having a unique combination of one of m scales and one of n orientations, where m and n are predetermined positive integers, and a matching metric calculating unit for calculating the matching metric defined by:

$$d(i, j) = \min_{\substack{p=0,1 \\ q=0,1}} \left[ \sum_{m}^{S-1} \sum_{n} \left| \frac{\mu^{i}_{m+p,n}}{\alpha(\mu_{m+p,n})} - \frac{\mu^{j}_{m+q,n}}{\alpha(\mu_{m+q,n})} \right| + \left| \frac{\sigma^{i}_{m+p,n}}{\alpha(\sigma_{m+p,n})} - \frac{\sigma^{j}_{m+q,n}}{\alpha(\sigma_{m+q,n})} \right| \right]$$

with respect to the original image and the m x n filtered images, where the mean and variance of the pixel values of the respective images are $\mu$ and $\sigma$, S is a predetermined positive integer representing the number of scale coefficients to be considered, and $\alpha(\ )$ is a predetermined scaling function.

In a final aspect of the present invention there is provided a digital image texture analyzing method for evaluating the similarity of textures of two arbitrary digital images by obtaining a matching metric between the two images, the method including the steps of (a) obtaining filtered images using predetermined filters having different orientation and scale coefficients with respect to two arbitrary images, and (b) obtaining a matching metric by calculating the minimum value of the sum of absolute differences between the variances and means of the pixel values with respect to an arbitrary filtered image and images filtered by filters having scale and orientation coefficients different from those of filters used for filtering the arbitrary image.

For a better understanding of the invention, and to show how embodiments of the same may be carried into effect, reference will now be made, by way of example, to the accompanying diagrammatic drawings in which:

Figure 1 illustrates a conventional digital image texture analyzing method;

Figure 2 is block diagram illustrating a digital image texture analyzing apparatus according to an embodiment of the present invention;

Figure 3 is a flow chart illustrating major steps of a digital image texture analyzing method according to an embodiment of the present invention;

Figure 4 is block diagram illustrating a digital image texture analyzing apparatus according to another embodiment of the present invention; and

Figures 5 through 7 are flow charts illustrating major steps of a digital image texture analyzing method according to another embodiments of the present invention performed by the apparatus shown in Figure 4.

Preferred embodiments of the present invention will now be described in detail with reference to the accompanying drawings.

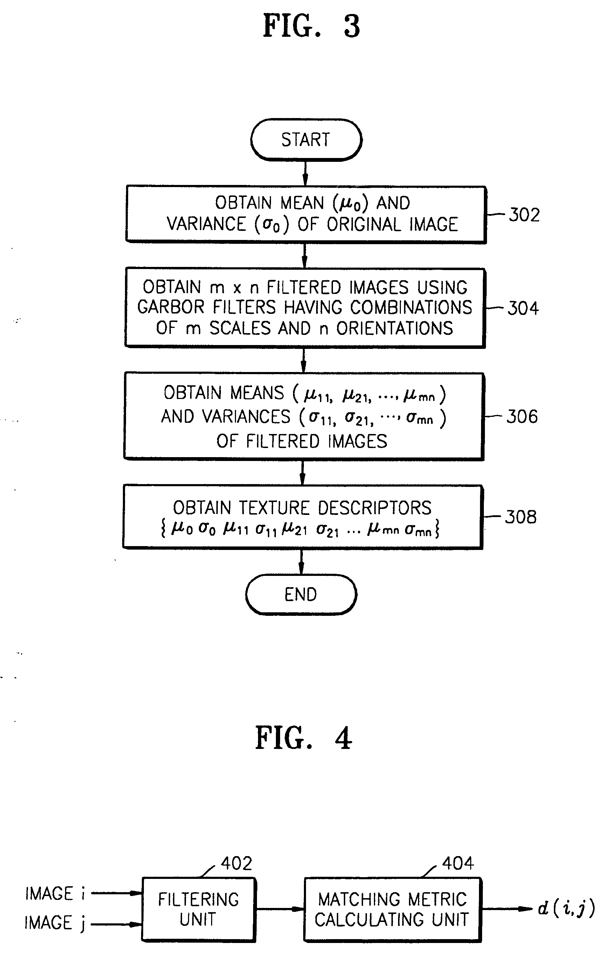

Figure 2 is block diagram illustrating a digital image texture analyzing apparatus according to an embodiment of the present invention, and Figure 3 is a flow chart illustrating major steps of a digital image texture analyzing method according to an embodiment of the present invention. Figure 3 will be occasionally referred to below.

First, referring to Figure 2, the digital image texture analyzing apparatus includes a first mean/variance calculating unit 202, a filtering unit 204, a second mean/variance calculating unit 206 and a texture descriptor setting unit 208.

The operation of the digital image texture analyzing apparatus will now be described.

The first mean/variance calculating unit 202 calculates the mean and variance of the pixel values of an original image, $\mu_0$ and $\sigma_0$. (step 302). Next, the filtering unit 204 obtains m x n filtered images using Gabor filters, each having a unique combination of one of m scales and one of n orientations (m and n are predetermined positive integers) (step 304). Then, the second mean/variance calculating unit 206 calculates the means and variances of the respective filtered images $\mu_{11}, \sigma_{11}, \mu_{21}, \sigma_{21} .... , \mu_{mn}, \sigma_{mn}$ (step 306) .

Now, the texture descriptor setting unit 208 obtains a texture descriptor in the form of $\{\mu_0\sigma_0\mu_{11}\sigma_{11}\mu_{21}...\mu_{mn}\sigma_{mn}\}$ containing the mean and variance of the pixel values of the original image obtained in the step 302, $\mu_0$ and $\sigma_0$, and the means and variances of the respective filtered images $\mu_{11}, \sigma_{11}, \mu_{21}, \sigma_{21}, ..., \mu_{mn}, \sigma_{mn}$ obtained in the step 306 (step 308).

The texture descriptor is used in indexing images. The indexed images form an image database. Once the image database is formed, of the two indexed images, an image having a texture descriptor similar to a texture descriptor of a query image can be searched for. In particular, a simulation was performed of a search for an image similar to a query image using a texture descriptor having the mean and variance of the pixel values of an original image as texture features based on the analyzing method of the present invention. The simulation result showed that the searching efficiency was improved.

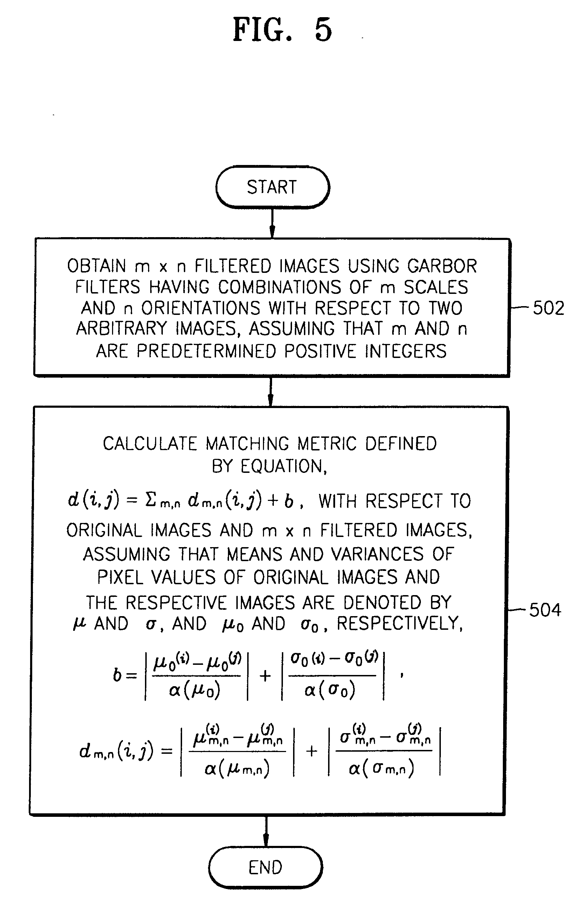

Figure 4 is a block diagram of a digital image texture analyzing apparatus according to another embodiment of the present invention, and Figure 5 is a flow chart illustrating major steps of a digital image texture analyzing method according to this embodiment. Figure 5 will be occasionally referred to below.

Referring to Figure 4, the digital image texture analyzing apparatus according to the second embodiment of the present invention includes a filtering unit 402 and a matching metric calculating unit 404.

The operation of the digital image texture analyzing apparatus will now be described.

The filtering unit 402 obtains m x n filtered images with respect to two arbitrary images using Gabor filters, each having a unique combination of one of m scales and one of n orientations (m and n are predetermined positive integers) (step 502).

The matching metric calculating unit 404 calculates the matching metric defined by:

$$d(i, j) = \sum_{m,n} d_{m,n}(i, j) + b$$

with respect to the original image and the m x n filtered images, where the mean and variance of the pixel values of the respective images are $\mu$ and $\sigma$, the mean and variance of the pixel values of the original image are $\mu_0$ and $\sigma_0$,

$$b = \left| \frac{\mu_0^{(i)} - \mu_0^{(j)}}{\alpha(\mu_0)} \right| + \left| \frac{\sigma_0^{(i)} - \sigma_0^{(j)}}{\alpha(\sigma_0)} \right|, \quad \text{and} \quad d_{m,n}(i, j) = \left| \frac{\mu_{m,n}^{(i)} - \mu_{m,n}^{(j)}}{\alpha(\mu_{m,n})} \right| + \left| \frac{\sigma_{m,n}^{(i)} - \sigma_{m,n}^{(j)}}{\alpha(\sigma_{m,n})} \right|$$

(step 504). Here, $\alpha(\ )$ denotes a scaling function for normalizing individual feature components. Thus, $\alpha(\mu_{m,n})$ and $\alpha(\sigma_{m,n})$ are scaled mean and variance of the respective feature components of the descriptors over an entire database. The calculated matching metric indicates a difference between texture features of the two images. In other words, if the value of the calculated matching metric is smaller, the textures of the two images are determined to be similar to each other.

According to the above-described digital image texture analyzing method, the similarity between two arbitrary digital images can be determined by obtaining the matching metric between two images. Also, the digital image texture analyzing method can be applied to search for an image using the texture features of the image.

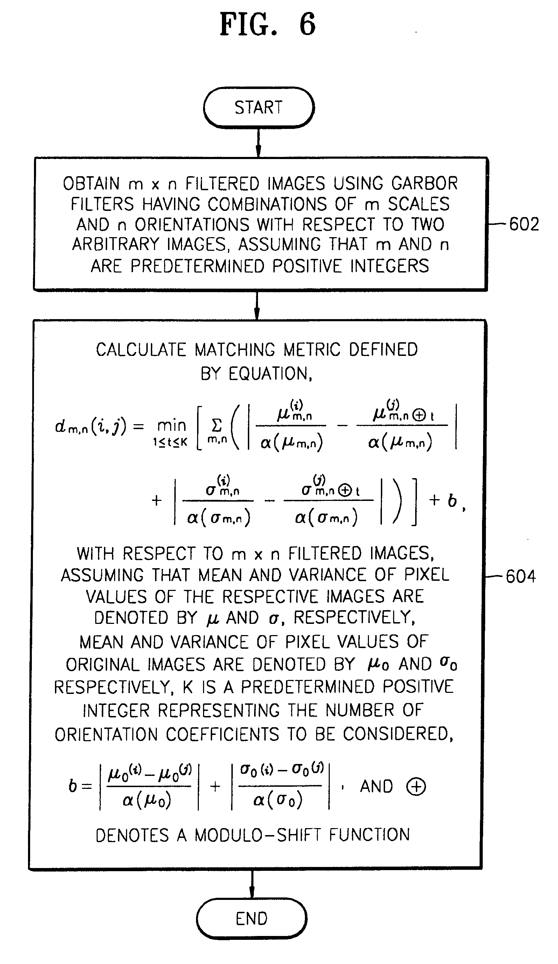

Figure 6 is a flow chart illustrating major steps of a digital image texture analyzing method according to another embodiment of the present invention performed by the apparatus shown in Figure 4.

In this embodiment, the filtering unit 402 obtains m x n filtered images with respect to two arbitrary images by filtering the original image using predetermined filters, each having a unique combination of one of m scales and one of n orientations (m and n are predetermined positive integers) (step 602).

Next, the matching metric calculating unit 404 calculates the matching metric defined by:

$$d_{m,n}(i, j) = \min_{1 \le t \le K} \left[ \sum_{m,n} \left( \left| \frac{\mu_{m,n}^{(i)}}{\alpha(\mu_{m,n})} - \frac{\mu_{m,n\oplus t}^{(j)}}{\alpha(\mu_{m,n})} \right| \right) + \left( \left| \frac{\sigma_{m,n}^{(i)}}{\alpha(\sigma_{m,n})} - \frac{\sigma_{m,n\oplus t}^{(j)}}{\alpha(\sigma_{m,n})} \right| \right) \right] + b$$

with respect to the m x n filtered images, where the mean and variance of the pixel values of the respective images are $\mu_0$ and $\sigma_0$, the mean and variance of the pixel values of the original image are $\mu_0$ and $\sigma_0$, K is a predetermined positive integer representing the number of orientations to be considered,

$$b = \left| \frac{\mu_0^{(i)} - \mu_0^{(j)}}{\alpha(\mu_0)} \right| + \left| \frac{\sigma_0^{(i)} - \sigma_0^{(j)}}{\alpha(\sigma_0)} \right|,$$

$\oplus$ denotes a modulo shift function, and $\alpha$ ( ) is a predetermined scaling function (step 604). The calculated matching metric indicates a difference between texture features of the two images. In other words, if the value of the calculated matching metric is smaller, the textures of the two images are determined to be similar to each other. In particular, only when the texture features of two images are similar and one image is rotated relative to the other image, the thus-calculated matching metric allows accurate analysis, that is, it is determined that the two images have similar texture features. In other words, even when one image is just rotated relative to the other image, it is determined that the texture features of the two images are similar to each other, unlike in the conventional analyzing method. According to the above-described digital image texture analyzing method, the similarity between two arbitrary digital images can be determined by obtaining the matching metric between two images. Also, the digital image texture analyzing method can be applied to search for an image using the texture features of the image.

In the above-described embodiment, the matching metric is obtained by calculating the sum of absolute differences in the mean of the pixel values and the sum of absolute differences between the variances of the pixel values, and calculating the minimum value of an added value of the calculated sums, with respect to an arbitrary filtered image and images filtered by Gabor filters having orientation coefficients different from those of filters used for filtering the arbitrary image.

However, the matching metric can also be obtained by calculating the minimum value of the sum of absolute differences in the mean of the pixel values with respect to an arbitrary filtered image and images filtered by Gabor filters having orientation coefficients different from those of filters used for filtering the arbitrary image. Alternatively, the matching metric can be obtained by calculating the minimum value of the sum of absolute differences between the variances of the pixel values with respect to an arbitrary filtered image and images filtered by Gabor filters having orientation coefficients different from those of filters used for filtering the arbitrary image.

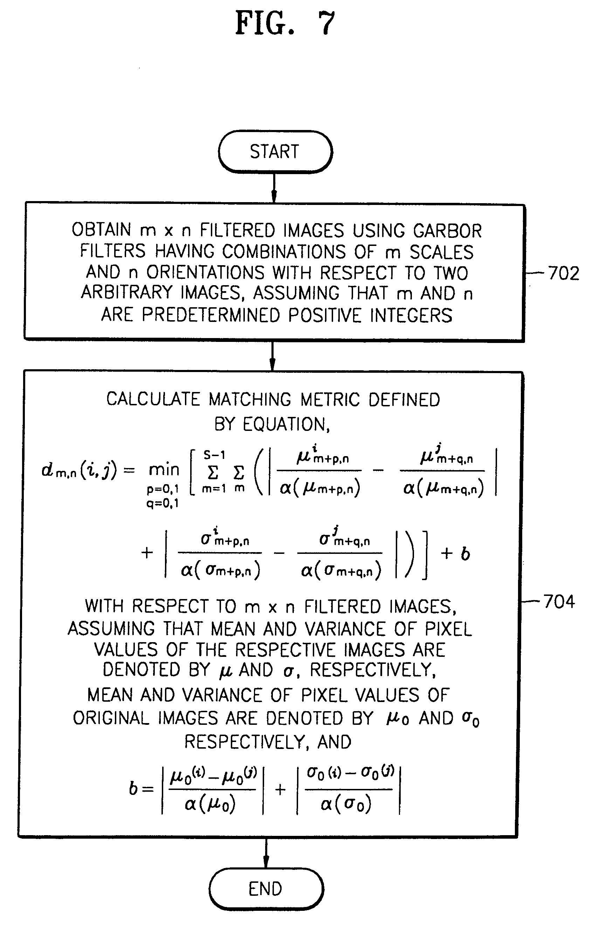

Figure 7 is a flow chart illustrating major steps of a digital image texture analyzing method according to another embodiment of the present invention performed by the apparatus shown in Figure 4.

In this embodiment, the filtering unit 402 obtains m x n filtered images with respect to two arbitrary images using Gabor filters, each having a unique combination of one of m scales and one of n orientations (m and n are positive integers) (step 702).

Next, the matching metric calculating unit 404 calculates the matching metric defined by:

$$d(i, j) = \min_{\substack{p=0,1 \\ q=0,1}} \left[ \sum_{m}^{S-1} \sum_{n} \left| \frac{\mu_{m+p,n}^{i}}{\alpha(\mu_{m+p,n})} - \frac{\mu_{m+q,n}^{j}}{\alpha(\mu_{m+q,n})} \right| + \left| \frac{\sigma_{m+p,n}^{i}}{\alpha(\sigma_{m+p,n})} - \frac{\sigma_{m+q,n}^{j}}{\alpha(\sigma_{m+q,n})} \right| \right] + b$$

with respect to the original image and the m x n filtered images, where the mean and variance of the pixel values of the respective images are $\mu 0$ and $\sigma 0$, the mean and variance of the pixel values of the original image are $\mu_0$ 0and $\sigma_0$0,

$$b = \left| \frac{\mu_0^{(i)} - \mu_0^{(j)}}{\alpha(\mu_0)} \right| + \left| \frac{\sigma_0^{(i)} - \sigma_0^{(j)}}{\alpha(\sigma_0)} \right| 0,$$

S is a predetermined positive integer representing the number of scale coefficients to be considered, and $\alpha$( ) is a predetermined scaling function. The calculated matching metric indicates a difference between texture features of the two images. In other words, if the value of the calculated matching metric is smaller, the textures of the two images are determined to be similar to each other. In particular, only when the texture features of two images are similar and one image is enlarged or reduced relative to the other image, the thus-calculated matching metric allows accurate analysis, that is, it is determined that the two images have similar texture features. In other words, even when one image is just enlarged or reduced relative to the other image, it is determined that the texture features of the two images are similar to each other, unlike in the conventional analyzing method. According to the above-described digital image texture analyzing method, the similarity between two arbitrary digital images can be determined by obtaining the matching metric between two digital images. Also, the digital image texture analyzing method can be applied to search for an image using the texture features of the image.

In the above-described embodiment, the matching metric is obtained by calculating the sum of absolute differences in the mean of the pixel values and the sum of absolute differences between the variances of the pixel values, and calculating the minimum value of an added value of the calculated sums, with respect to an arbitrary filtered image and images filtered by Gabor filters having scale coefficients different from those of filters used for filtering the arbitrary image.

The matching metric can also be obtained by calculating the minimum value of the sum of absolute differences in the mean of the pixel values with respect to an arbitrary filtered image and images filtered by Gabor filters having scale coefficients different from those of filters used for filtering the arbitrary image. Alternatively, the matching metric can be obtained by calculating the minimum value of the sum of absolute differences between the variances of the pixel values with respect to an arbitrary filtered image and images filtered by Gabor filters having orientation coefficients different from those of filters used for filtering the arbitrary image.

The technologies applied to the embodiments described above with reference to Figures 6 and 7 can be used in appropriate combinations as understood by one skilled in the art. According to the digital image texture analyzing method of the present invention, even when one image is rotated, enlarged or reduced relative to the other image, the two images can be accurately analyzed, that is, it is determined that they have similar texture features. The embodiments based on the combinations of the above-described embodiments shown in Figures 6 and 7 need not be described herein.

As described above, in the digital image texture analyzing method according to the present invention, the texture features of images can be analyzed or compared accurately. Also, even when one image is rotated, enlarged or reduced relative to the other image, accurate analysis of the two images is allowed, that is, it is determined that they have similar texture features.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

**Claims**

1. A digital image texture analyzing method for evaluating the similarity of textures of two arbitrary digital images by obtaining a matching metric between the two images, the method comprising the steps of:

    (a) obtaining (502) m x n filtered images with respect to two arbitrary images using predetermined filters, each having a unique combination of one of m scales and one of n orientations, where m and n are predetermined positive integers;

    **characterised by**:

    (b) calculating (504) the matching metric defined by:

    $$d(i, j) = \sum_{m,n} d_{m,n}(i, j) + b$$

    with respect to the original image and the m x n filtered images, where the mean and variance of the pixel values of the respective images are $\mu$ and $\sigma$, the mean and variance of the pixel values of the original image are $\mu_0$ and $\sigma_0$,

$$b = \left| \frac{\mu_0^{(i)} - \mu_0^{(j)}}{\alpha(\mu_0)} \right| + \left| \frac{\sigma_0^{(i)} - \sigma_0^{(j)}}{\alpha(\sigma_0)} \right|, \quad d_{m,n}(i,j) = \left| \frac{\mu_{m,n}^{(i)} - \mu_{m,n}^{(j)}}{\alpha(\mu_{m,n})} \right| + \left| \frac{\sigma_{m,n}^{(i)} - \sigma_{m,n}^{(j)}}{\alpha(\sigma_{m,n})} \right|$$

,and $\alpha(\ )$ is a predetermined scaling function.

2. The method according to claim 1, wherein the predetermined filters are Gabor filters.

3. A computer-readable recording medium for storing program codes for performing a digital image texture analyzing method for evaluating the similarity of textures of two arbitrary digital images by obtaining a matching metric between the two images, the method comprising the steps of:

   (a) obtaining (502) m x n filtered images with respect to two arbitrary images using predetermined filters, each having a unique combination of one of m scales and one of n orientations, where m and n are predetermined positive integers;

**characterised by**:

   (b) calculating (504) the matching metric defined by:

$$d(i,j) = \sum_{m,n} d_{m,n}(i,j) + b$$

with respect to the original image and the m x n filtered images, where the mean and variance of the pixel values of the respective images are $\mu$ and $\sigma$, the mean and variance of the pixel values of the original image are $\mu_0$ and $\sigma_0$,

$$b = \left| \frac{\mu_0^{(i)} - \mu_0^{(j)}}{\alpha(\mu_0)} \right| + \left| \frac{\sigma_0^{(i)} - \sigma_0^{(j)}}{\alpha(\sigma_0)} \right|, \quad d_{m,n}(i,j) = \left| \frac{\mu_{m,n}^{(i)} - \mu_{m,n}^{(j)}}{\alpha(\mu_{m,n})} \right| + \left| \frac{\sigma_{m,n}^{(i)} - \sigma_{m,n}^{(j)}}{\alpha(\sigma_{m,n})} \right|,$$

and $\alpha(\ )$ is a predetermined scaling function.

4. The recording medium according to claim 3, wherein the predetermined filters are Gabor filters.

5. A digital image texture analyzing apparatus for evaluating the similarity of textures of two arbitrary digital images by obtaining a matching metric between the two images, the apparatus comprising:

   (a) a filtering unit (402) for obtaining m x n filtered images with respect to two arbitrary images using predetermined filters, each having a unique combination of one of m scales and one of n orientations, where m and n are predetermined positive integers;

**characterised by**:

   (b) a matching metric calculating unit (404) for calculating the matching metric defined by:

$$d(i,j) = \sum_{m,n} d_{m,n}(i,j) + b$$

with respect to the original image and the m x n filtered images, where the mean and variance of the pixel values of the respective images are $\mu$ and $\sigma$, the mean and variance of the pixel values of the original image are $\mu_0$ and $\sigma_0$,

$$b = \left| \frac{\mu_0^{(i)} - \mu_0^{(j)}}{\alpha(\mu_0)} \right| + \left| \frac{\sigma_0^{(i)} - \sigma_0^{(j)}}{\alpha(\sigma_0)} \right|, \quad d_{m,n}(i,j) = \left| \frac{\mu_{m,n}^{(i)} - \mu_{m,n}^{(j)}}{\alpha(\mu_{m,n})} \right| + \left| \frac{\sigma_{m,n}^{(i)} - \sigma_{m,n}^{(j)}}{\alpha(\sigma_{m,n})} \right|$$

,and $\alpha(\ )$ is a predetermined scaling function.

6. The apparatus according to claim 5, wherein the predetermined filters are Gabor filters.

# FIG. 1 (PRIOR ART)

START

FILTER DIGITAL IMAGE
USING GARBOR FILTER — 102

OBTAIN MEAN AND VARIANCE OF
EACH FILTERED IMAGE
$\{ M_1, V_1, M_2, V_2, \cdots M_n, V_n \}$ — 104

SET OBTAINED MEAN AND VARIANCE
AS TEXTURE DESCRIPTOR OF IMAGE — 106

END

# FIG. 2

ORIGINAL IMAGE

1st MEAN/
VARIANCE
CALCULATING
UNIT — 202

FILTERING
UNIT — 204

2nd MEAN/
VARIANCE
CALCULATING
UNIT — 206

TEXTURE
DESCRIPTOR
SETTING
UNIT — 208

$\{ \mu_0 \, \sigma_0 \, \mu_{11} \, \sigma_{11} \, \mu_{21} \, \sigma_{21} \\ \cdots \mu_{mn} \, \sigma_{mn} \}$

# FIG. 3

START

OBTAIN MEAN ($\mu_0$) AND
VARIANCE ($\sigma_0$) OF ORIGINAL IMAGE — 302

OBTAIN m x n FILTERED IMAGES USING
GARBOR FILTERS HAVING COMBINATIONS — 304
OF m SCALES AND n ORIENTATIONS

OBTAIN MEANS ($\mu_{11}, \mu_{21}, ...., \mu_{mn}$)
AND VARIANCES ($\sigma_{11}, \sigma_{21}, ...., \sigma_{mn}$) — 306
OF FILTERED IMAGES

OBTAIN TEXTURE DESCRIPTORS
$\{ \mu_0 \; \sigma_0 \; \mu_{11} \; \sigma_{11} \; \mu_{21} \; \sigma_{21} \; ... \; \mu_{mn} \; \sigma_{mn} \}$ — 308

END

# FIG. 4

IMAGE i ⟶

IMAGE j ⟶ | FILTERING UNIT | 402 | ⟶ | MATCHING METRIC CALCULATING UNIT | 404 | ⟶ $d(i,j)$

# FIG. 5

START

OBTAIN m x n FILTERED IMAGES USING GARBOR
FILTERS HAVING COMBINATIONS OF m SCALES
AND n ORIENTATIONS WITH RESPECT TO TWO
ARBITRARY IMAGES, ASSUMING THAT m AND n
ARE PREDETERMINED POSITIVE INTEGERS

—502

CALCULATE MATCHING METRIC DEFINED
BY EQUATION,

$$d(i,j) = \Sigma_{m,n} \, d_{m,n}(i,j) + b \, ,$$ WITH RESPECT TO

ORIGINAL IMAGES AND m x n FILTERED IMAGES,
ASSUMING THAT MEANS AND VARIANCES OF
PIXEL VALUES OF ORIGINAL IMAGES AND
THE RESPECTIVE IMAGES ARE DENOTED BY
$\mu$ AND $\sigma$, AND $\mu_0$ AND $\sigma_0$, RESPECTIVELY,

$$b = \left| \frac{\mu_0^{(i)} - \mu_0^{(j)}}{\alpha(\mu_0)} \right| + \left| \frac{\sigma_0^{(i)} - \sigma_0^{(j)}}{\alpha(\sigma_0)} \right| \, ,$$

$$d_{m,n}(i,j) = \left| \frac{\mu_{m,n}^{(i)} - \mu_{m,n}^{(j)}}{\alpha(\mu_{m,n})} \right| + \left| \frac{\sigma_{m,n}^{(i)} - \sigma_{m,n}^{(j)}}{\alpha(\sigma_{m,n})} \right|$$

—504

END

# FIG. 6

START

OBTAIN m x n FILTERED IMAGES USING GARBOR FILTERS HAVING COMBINATIONS OF m SCALES AND n ORIENTATIONS WITH RESPECT TO TWO ARBITRARY IMAGES, ASSUMING THAT m AND n ARE PREDETERMINED POSITIVE INTEGERS —602

CALCULATE MATCHING METRIC DEFINED BY EQUATION,

$$d_{m,n}(i,j) = \min_{1 \le t \le K} \left[ \sum_{m,n} \left( \left| \frac{\mu^{(i)}_{m,n}}{\alpha(\mu_{m,n})} - \frac{\mu^{(j)}_{m,n \oplus t}}{\alpha(\mu_{m,n})} \right| + \left| \frac{\sigma^{(i)}_{m,n}}{\alpha(\sigma_{m,n})} - \frac{\sigma^{(j)}_{m,n \oplus t}}{\alpha(\sigma_{m,n})} \right| \right) \right] + b,$$

WITH RESPECT TO m x n FILTERED IMAGES, ASSUMING THAT MEAN AND VARIANCE OF PIXEL VALUES OF THE RESPECTIVE IMAGES ARE DENOTED BY $\mu$ AND $\sigma$, RESPECTIVELY, MEAN AND VARIANCE OF PIXEL VALUES OF ORIGINAL IMAGES ARE DENOTED BY $\mu_0$ AND $\sigma_0$ RESPECTIVELY, K IS A PREDETERMINED POSITIVE INTEGER REPRESENTING THE NUMBER OF ORIENTATION COEFFICIENTS TO BE CONSIDERED,

$$b = \left| \frac{\mu_0^{(i)} - \mu_0^{(j)}}{\alpha(\mu_0)} \right| + \left| \frac{\sigma_0^{(i)} - \sigma_0^{(j)}}{\alpha(\sigma_0)} \right|, \text{ AND } \oplus$$

DENOTES A MODULO-SHIFT FUNCTION

—604

END

# FIG. 7

START

OBTAIN m x n FILTERED IMAGES USING GARBOR FILTERS HAVING COMBINATIONS OF m SCALES AND n ORIENTATIONS WITH RESPECT TO TWO ARBITRARY IMAGES, ASSUMING THAT m AND n ARE PREDETERMINED POSITIVE INTEGERS ⎯702

CALCULATE MATCHING METRIC DEFINED BY EQUATION,

$$d_{m,n}(i,j) = \min_{\substack{p=0,1 \\ q=0,1}} \left[ \sum_{m=1}^{S-1} \frac{1}{m} \sum \left( \left| \frac{\mu^i_{m+p,n}}{\alpha(\mu_{m+p,n})} - \frac{\mu^j_{m+q,n}}{\alpha(\mu_{m+q,n})} \right| \right. \right.$$

$$\left. \left. + \left| \frac{\sigma^i_{m+p,n}}{\alpha(\sigma_{m+p,n})} - \frac{\sigma^j_{m+q,n}}{\alpha(\sigma_{m+q,n})} \right| \right) \right] + b$$

WITH RESPECT TO m x n FILTERED IMAGES, ASSUMING THAT MEAN AND VARIANCE OF PIXEL VALUES OF THE RESPECTIVE IMAGES ARE DENOTED BY $\mu$ AND $\sigma$, RESPECTIVELY,

MEAN AND VARIANCE OF PIXEL VALUES OF ORIGINAL IMAGES ARE DENOTED BY $\mu_0$ AND $\sigma_0$ RESPECTIVELY, AND

$$b = \left| \frac{\mu_0^{(i)} - \mu_0^{(j)}}{\alpha(\mu_0)} \right| + \left| \frac{\sigma_0^{(i)} - \sigma_0^{(j)}}{\alpha(\sigma_0)} \right|$$

⎯704

END